# FASCICULE DE BREVET EUROPEEN

(11) **EP 3 262 919 B1**
(45) Date de publication et mention de la délivrance du brevet: **13.03.2019**
(21) Numéro de dépôt: 17305811.6
(22) Date de dépôt: 28.06.2017
(51) Int. Cl.: A01D 90/12, A01K 5/00

(54) **VÉHICULE AGRICOLE MUNI D'UN MOYEN DE PESÉE AMÉLIORÉ**
LANDWIRTSCHAFTLICHES FAHRZEUG, DAS MIT EINER VERBESSERTEN WIEGEVORRICHTUNG AUSGESTATTET IST
AGRICULTURAL VEHICLE PROVIDED WITH IMPROVED WEIGHING MEANS

(30) Priorité: 30.06.2016 FR 1670356
(43) Date de publication de la demande: 03.01.2018
(73) Titulaire: Kuhn-Audureau SA, 85260 La Copechagnière (FR)
(72) Inventeur: MIGNON, Florent, 85250 Saint-André-Goule-d'Oie (FR); PORTRAIT, Alain, 85600 Montaigu (FR); COSSON, Mickaël, 85140 La Merlatière (FR)
(74) Mandataire: Nuss, Laurent

(56) Documents cités:
- CN-B- 104 160 976
- DE-A1- 10 154 733
- DE-A1- 10 348 206
- DE-U1- 20 115 929
- DE-U1- 29 820 808
- US-A1- 2004 163 577

## Description

La présente invention concerne le domaine du machinisme agricole, plus particulièrement le matériel agricole roulant destiné à transporter des matières alimentaires ou non, et apte à effectuer une pesée de la quantité transportée.

L'invention concerne plus spécifiquement un véhicule agricole équipé d'un contenant et d'un moyen de pesée, notamment une remorque benne, une remorque mélangeuse ou analogue.

Dans certaines applications dans le domaine agricole, il est fortement souhaitable de pouvoir effectuer une pesée d'un chargement transporté par un véhicule tel qu'une remorque sans nécessiter de moyen de pesée extérieur additionnel, c'est-à-dire en disposant d'un moyen de pesée intégré, préférentiellement taré par rapport au contenant vide.

Tel est notamment le cas pour les mélangeuses ou remorques mélangeuses destinées à assurer la distribution de mélanges d'aliments fibreux, granulaires et/ou pulvérulents en vrac sous forme de rations optimisées sur le plan nutritionnel et sur le plan technico-économique.

Dans ce contexte, la pesée est l'élément clé pour la réalisation de la ration correspondant à l'ensemble des aliments constitutifs d'un régime distribué quotidiennement en vue de satisfaire leurs besoins. Ainsi, pour la production de lait des vaches laitières, la ration doit pratiquement toujours être identique, elle est composée de fourrage grossiers (foin, ensilage d'herbe et de maïs), aliments succulents (céréales) et d'aliments concentrés (tourteaux, graines de protéagineux) pour compenser les éventuels déséquilibres nutritionnels.

Pour aboutir à une mixture à distribuer qui est relativement homogène, ces matériels comprennent des organes rotatifs tels que des vis. Tel est notamment le cas des mélangeuses des types connus sous les désignations "EUROMIX" ou "PROFILE" (marques déposées) de la société KUHN.

Ces mélangeuses présentent bien entendu également un timon d'attelage et un dispositif de roulement du type essieu simple ou essieu double (pour les mélangeurs de grande capacité).

Dans certaines variantes de réalisation de ces mélangeuses connues, ainsi que dans la mélangeuse connue par le document DE 10348206, le contenant destiné à contenir la ration repose sur un essieu double par l'intermédiaire de pesons ou de capteurs de pesée analogues, préférentiellement directement, c'est-à-dire sans mise en oeuvre d'un châssis intermédiaire. En effet, une construction sans châssis est plus simple et moins chère puisqu'il n'y a pas de châssis complexe à réaliser (le châssis est complexe car l'ensemble de la caisse et des équipements de déchargement/paillage doivent être suspendus).

Dans cette réalisation connue du document DE précité, le contenant repose sur l'essieu double par deux pesons, c'est-à-dire par un peson arrangé à proximité de chaque roue avant (celle qui est poussée par la liaison à peson). Ces deux pesons supportent normalement l'essentiel de la charge. Le montage de ces deux pesons est en porte à faux et nécessite un renfort sur la hauteur du contenant pour une tenue structurelle suffisante. Ce nombre limité de points d'appui et de liaison ne favorise pas une répartition optimale des efforts et contraintes au niveau du contenant (généralement une caisse en tôle mécano-soudée). Le moyen de pesée comporte également au moins un peson additionnel au niveau du timon, plus précisément au niveau de l'anneau d'attelage.

De plus, dans les machines de grande capacité, les pesons, en particulier les deux pesons assurant la liaison contenant-essieu, doivent être dimensionnés pour pouvoir supporter des charges élevées. Il en résulte la mise en oeuvre de pesons avec un encombrement en hauteur, important, du fait en particulier d'une section plus grande, et dont le prix est élevé. Le fond du contenant se retrouve ainsi déplacé à distance (vers le haut) des roues, diminuant ainsi la stabilité des mélangeuses à l'état chargé (déplacement vers le haut du centre de gravité), rendant plus fastidieux leur chargement et pouvant interdire leur passage à travers des portes ou des passages d'accès de hauteur limitée.

Le problème posé à la présente invention consiste à proposer une solution permettant de surmonter les limitations précitées, en particulier, mais non limitativement, pour des mélangeuses ou remorques mélangeuses.

A cet effet, l'invention a pour objet un véhicule agricole comprenant un contenant monté sur au moins un train de roues, en particulier remorque, benne, mélangeuse ou remorque mélangeuse, et dans lequel le contenant repose par l'intermédiaire de platines ou de consoles de fixation et de pesons ou capteurs de pesée, préférentiellement directement, c'est-à-dire sans mise en oeuvre d'un châssis intermédiaire, sur un ou plusieurs essieu(x) formant ledit train de roues,
véhicule caractérisé en ce que le contenant est monté sur l'essieu ou chacun des essieux du train considéré par l'intermédiaire d'au moins deux paires de pesons, chaque paire étant constituée par deux pesons situés de part et d'autre d'un plan vertical contenant l'axe de l'essieu, dans le cas d'un train à essieu unique, ou d'un plan parallèle aux plans verticaux contenant les axes des essieux d'un train à plusieurs essieux.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation latérale d'un véhicule sous forme de remorque mélangeuse à essieu double selon un premier mode de réalisation de l'invention ;
la figure 2 est une vue de dessus, partiellement par transparence, à travers le fond du contenant, du véhicule représenté figure 1 ;
la figure 3 est une vue partielle en perspective du dispositif de roulement du véhicule des figures 1 et 2, le contenant et le timon étant enlevés ;
la figure 4 est une vue partielle de détail, de dessous et à une échelle différente, des zones de liaison entre le double essieu et le fond du contenant du véhicule représenté figures 1 et 2 ;
la figure 5 est une vue partielle en élévation latérale de la zone de liaison entre un essieu simple ou unique et le fond du contenant du véhicule agricole, selon un deuxième mode de réalisation de l'invention ;
la figure 6 est une vue partielle en élévation latérale de la zone de liaison entre deux essieux montés en tandem et le fond du contenant du véhicule agricole, selon un troisième mode de réalisation de l'invention, et,
la figure 7 est une vue partielle en élévation latérale de la zone de liaison entre trois essieux arrangés en tridem et le fond du contenant du véhicule agricole, selon un quatrième mode de réalisation de l'invention.

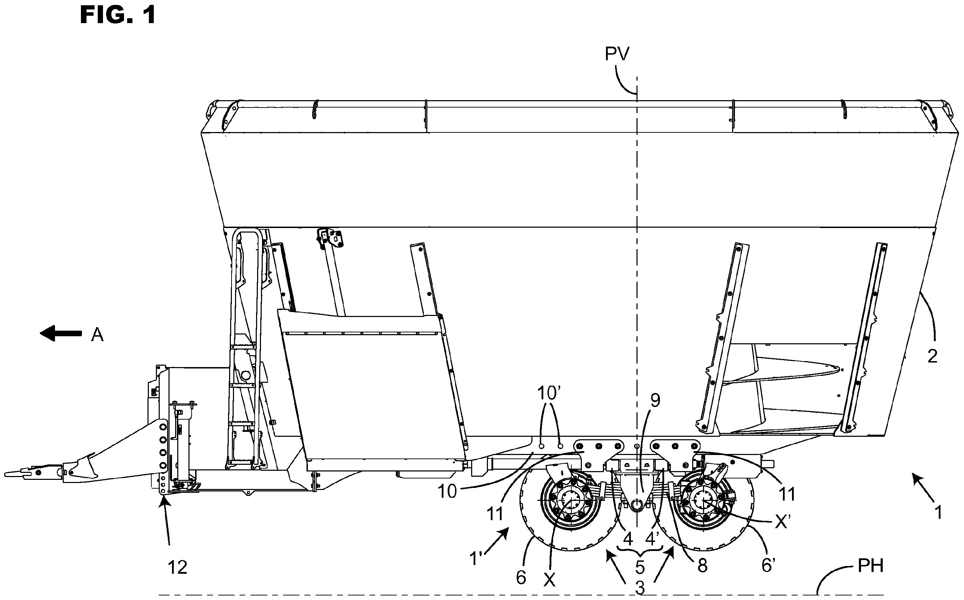

Les figures 1 à 7 montrent, au moins partiellement, un véhicule agricole 1 comprenant un contenant 2 monté sur au moins un train 1' de roues 6, 6', en particulier remorque benne, mélangeuse ou remorque mélangeuse, et dans lequel le contenant 2 repose par l'intermédiaire de platines ou de consoles de fixation 9, 11 et de pesons ou de capteurs de pesée 4, 4', préférentiellement directement, c'est-à-dire sans mise en oeuvre d'un châssis intermédiaire, sur un ou plusieurs essieu(x) formant ledit train de roues 1'.

Conformément à l'invention, le contenant 2 est monté sur l'essieu 3 ou chacun des essieux 3 du train 1' considéré par l'intermédiaire d'au moins deux paires 5 et 5' de pesons 4, 4', chaque paire 5, 5' étant constituée par deux pesons 4 et 4' situés de part et d'autre d'un plan vertical PV contenant l'axe X de l'essieu 3, dans le cas d'un train 1' à essieu unique, ou d'un plan PV parallèle aux plans verticaux contenant les axes X, X', X" des essieux 3 d'un train 1' à plusieurs essieux.

Avantageusement, les deux pesons 4 et 4' d'une même paire 5, 5' sont arrangés sensiblement symétriquement par rapport au plan vertical PV associé et les pesons 4, 4' de deux paires (réalisant une même liaison essieu-contenant) sont identiques. En variante, les deux pesons 4 et 4' d'une même paire 5, 5', peuvent être arrangés de manière asymétrique par rapport au plan vertical PV associé, les pesons des deux paires étant éventuellement différents.

Les pesons 4, 4' sont préférentiellement arrangés perpendiculairement au plan PV associé, mais peuvent aussi être arrangés parallèlement à ce plan, c'est-à-dire parallèlement à l'axe X, X', X" correspondant.

Ces différentes possibilités d'arrangement des pesons 4, 4' n'ont pas d'influence notable sur la fiabilité ou la qualité de la pesée.

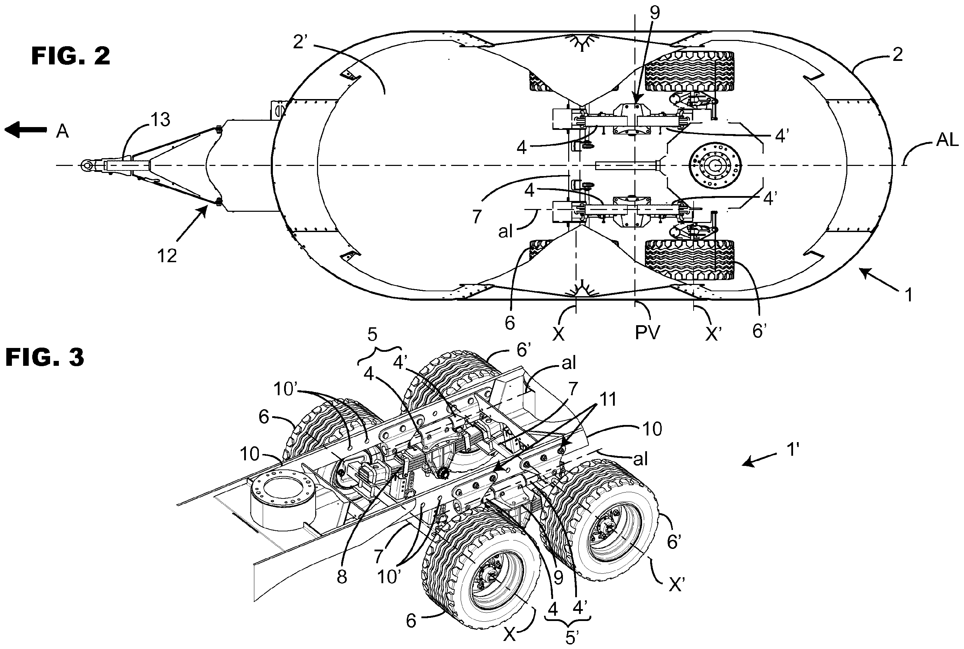

Comme le montrent notamment les figures 2 à 4, chaque paire de pesons 5, 5' est décalée latéralement par rapport à l'axe longitudinal AL du véhicule 1 en direction, et préférentiellement à proximité immédiate, de la roue 6 ou des roues 6, 6', du train 1', située(s) d'un côté du véhicule 1.

Grâce à la mise en oeuvre d'au moins quatre pesons 4, 4' pour chaque liaison contenant 2 - essieu 3 et à la disposition deux par deux desdits pesons au niveau de l'essieu 3 concerné, l'invention permet de réduire la dimension des pesons 4, 4' utilisés, tout en pouvant supporter une charge plus importante, et permet une meilleure distribution des efforts dans la caisse ou le contenant 2. La dimension réduite des pesons 4, 4' permet également d'aboutir à une solution compacte en hauteur, pour une taille de contenant 2 donnée. Or, la hauteur du véhicule 1 est déterminante pour accéder ou non dans un bâtiment. Une hauteur réduite du véhicule 1 est également appréciable lors du chargement de la caisse avec par exemple les aliments composant la ration.

La mise en oeuvre de quatre pesons 4 et 4' par liaison avec une disposition symétrique ou non et à distance du plan vertical PV concerné, fournit une liaison rigide et résistante avec bonne répartition des contraintes, compte tenu de la multiplication et de l'écartement des points de fixation avec le contenant 2.

En effet, l'écartement relatif entre ceux-ci permet une distribution spatialement plus répartie des efforts dans le fond 2' du contenant 2.

Enfin, une réduction de la section des pesons 4, 4' résulte aussi en une liaison plus fiable, une amélioration de la compacité en hauteur, une baisse des coûts de revient et du poids à vide du véhicule 1. La charge sur chaque peson 4, 4' et donc leur sollicitation individuelle sont également diminuées ; il en est de même des éléments de fixation et d'assemblage reliant lesdits pesons 4, 4' au contenant 2 et à l'essieu 3 concerné.

En accord avec un mode de réalisation préféré ressortant des figures 2 à 5 notamment, chaque peson 4, 4' est solidarisé, d'une part, vers le bas, avec la traverse 7 de l'essieu unique 3 ou avec un élément de suspension 8 (par exemple un ressort à lames) reliant les traverses 7 de deux essieux 3, par l'intermédiaire d'une première platine ou console de fixation 9 et, d'autre part, vers le haut, avec le fond 2' du contenant 2 ou avec un longeron 10 s'étendant sous ledit fond 2', par l'intermédiaire d'une seconde platine ou console de fixation 11, fournissant ainsi une liaison rigide entre ledit contenant 2 et la ou les traverse(s) 7 de l'essieu 3, les zones de solidarisation des secondes platines ou consoles 11 des deux pesons 4, 4' d'une même paire 5, 5' avec le fond 2' ou un longeron 10 étant situées à distance du plan vertical PV associé à la paire considérée.

Avantageusement, les deux pesons 4 et 4' d'une même paire de pesons 5, 5' sont solidarisés avec la traverse 7 de l'essieu 3 unique ou avec l'élément de suspension 8 reliant les traverses 7 de deux essieux 3, par l'intermédiaire d'une même console ou platine inférieure 9 comportant deux sites de montage 9' opposés et symétriques pour lesdits pesons 4 et 4' de la paire 5, 5' considérée. On aboutit ainsi à un arrangement de liaisons, pour chaque paire 5, 5', comprenant une liaison double espacée avec le contenant 2 et une liaison simple avec l'essieu 3.

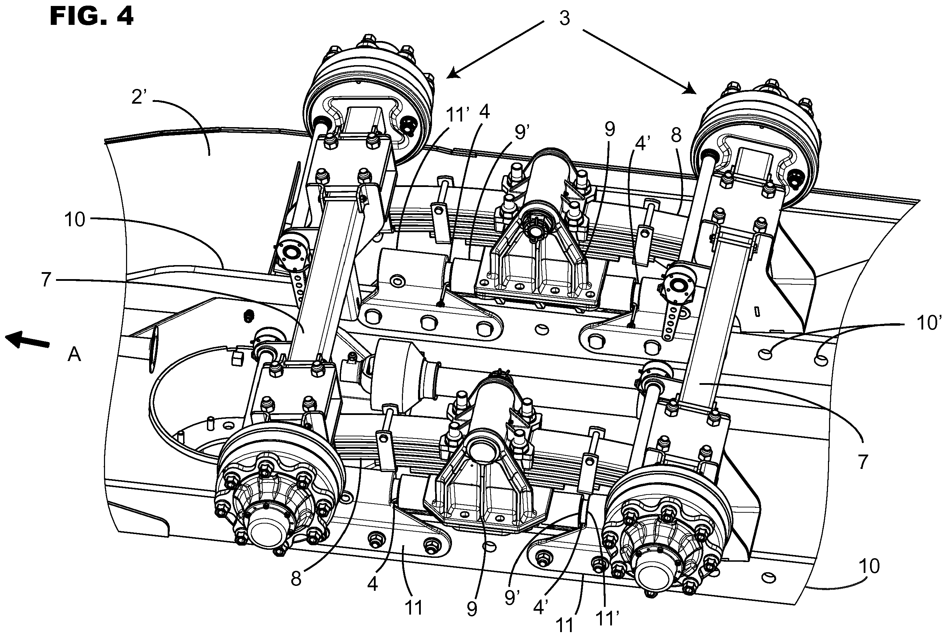

Comme le montrent les figures 4 à 7, différentes constructions de train 1' de roues 6, 6' sont susceptibles d'intégrer les dispositions techniques spécifiques de l'invention décrites ci-dessous et ci-après.

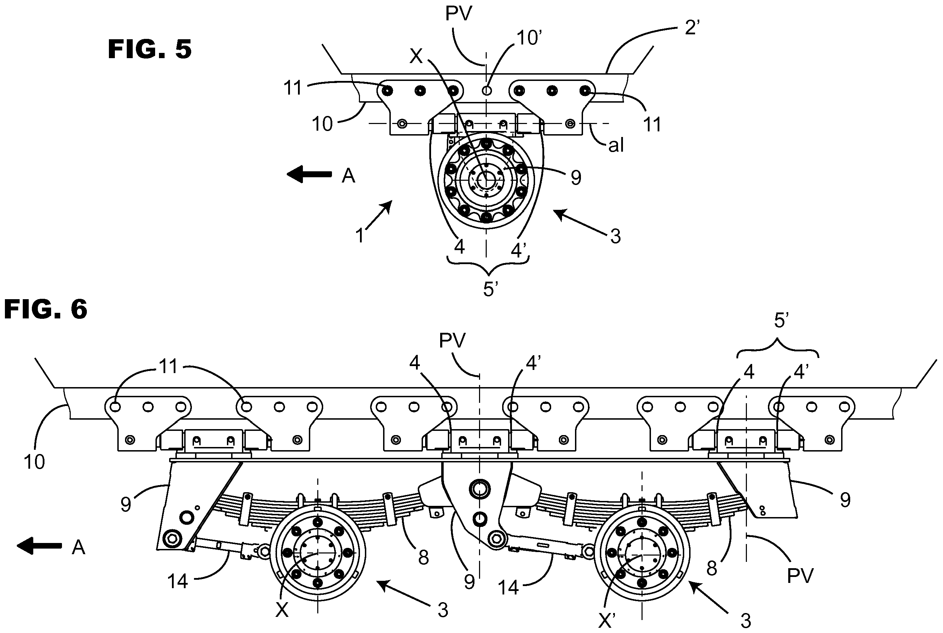

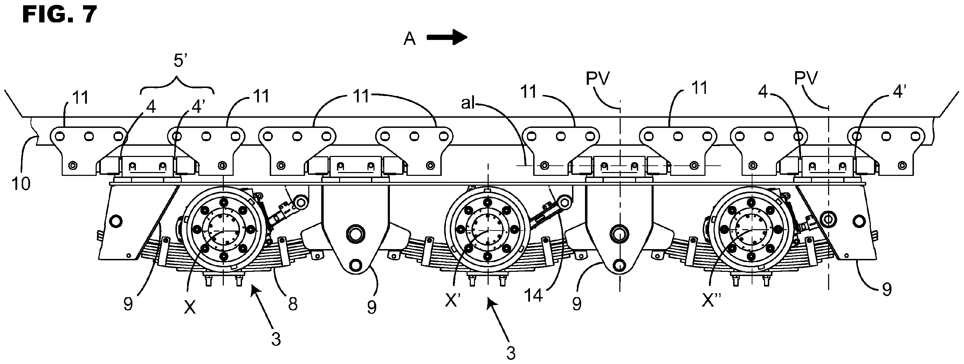

Ainsi, en relation avec les réalisations les plus courantes de dispositifs de roulement et de trains de roues 1' de véhicules agricoles 1 du type remorque, l'invention peut être implémentée dans une construction :
- à essieu 3 unique ou simple (figure 5) ;
- à deux essieux 3 (figures 4 et 6), du type double (bogie) ou tandem ;
- à trois essieux 3 (figure 7), arrangés en tridem.

L'utilisation d'un essieu tandem ou d'un essieu triple est préconisée dans le cas d'un contenant 2 de très grande capacité et pour une utilisation routière régulière, ces essieux permettant une meilleure répartition des charges. L'essieu tandem est considéré comme deux essieux simples qui sont indépendants l'un de l'autre.

Dans l'arrangement particulier des pesons 4 et 4', les composantes de charge agissent dans la direction de charge du peson. Il n'y a donc pas de charges parasites qui pourraient générer des erreurs sur le résultat de la pesée.

En accord avec une première variante, représentée sur les figures 1 à 4, il peut être prévu que, dans le cas d'un train de roues 1' à deux essieux 3, les essieux 3 soient fixés aux deux extrémités opposés d'un élément de suspension 8 allongé sous forme d'arrangement de lames ressort, les deux pesons 4, 4' de chacune desdites paires étant solidarisés, de manière centrée, audit arrangement de lames ressort par une console de fixation inférieure 9.

On aboutit ainsi à une construction à essieu double.

En accord avec une seconde variante constructive, représentée figure 6, il peut aussi être prévu que, dans le cas d'un train de roues 1' à deux essieux 3 chaque essieu 3 est fixé, de manière centrée à un élément de suspension 8 allongé sous forme d'arrangement de lames ressort, les deux extrémités opposées dudit élément de suspension 8 étant chacune solidarisée à une paire 5, 5' de pesons 4, 4' par l'intermédiaire d'une console de fixation 9, une desdites consoles 9 étant éventuellement reliée aux extrémités en regard ou mutuellement rapprochée des deux éléments de suspension allongés 8.

On aboutit alors à une construction à deux essieux 3 montés en tandem.

Comme le montrent les figures 6 et 7, les consoles ou platines inférieures 9 situées devant les essieux 3 dans la direction de roulement A, peuvent éventuellement servir de points d'ancrage à des biellettes 14 reliées aux traverses 7, ou à leurs étriers de solidarisation aux extrémités des éléments de suspension allongés, pour stabiliser l'essieu 3 concerné à l'encontre des forces ou contraintes de roulement résistives.

Conformément à une caractéristique de l'invention, chaque peson 4, 4' présente une structure allongée, avec une extension privilégiée selon un axe longitudinal al, les axes longitudinaux al des quatre pesons 4, 4' des deux paires 5, 5' affectées à l'essieu 3 ou à une même traverse 7, étant tous situés dans un même plan horizontal PH, en étant préférentiellement parallèles à l'axe longitudinal AL du véhicule agricole 1.

Selon une variante constructive permettant, notamment en relation avec la caractéristique précédente, d'aboutir à un encombrement en hauteur limité, chacun des quatre pesons 4, 4' des deux paires 5, 5' affectées à l'essieu 3 ou à une même traverse 7, présente une structure allongée s'étendant selon un axe longitudinal al, les deux pesons 4 et 4' de chaque paire 5, 5' étant conformés et montés de telle manière que leurs sites de montage 9', 11', respectivement au niveau de la première platine 9 et au niveau des deux secondes platines 11, soient sensiblement alignés.

En accord avec un choix avantageux parmi les solutions de capteurs de pesée connues de l'homme du métier, chaque peson 4, 4' peut consister en un capteur de flexion ou de cisaillement orienté ou unidirectionnel, préférentiellement en une jauge de contrainte allongée de forme cylindrique, déformable sous contrainte selon une direction transversale à sa direction longitudinale al et sensiblement rigide dans les autres directions.

Selon une autre caractéristique de l'invention, le fond 2' du contenant 2 est monté sur deux longerons support 10 qui comportent une pluralité de sites de solidarisation 10' pour les consoles ou platines 11 de fixation supérieure des pesons 4, 4', autorisant une pluralité de positionnements relatifs de fixation des paires de pesons 5 et 5' par rapport au contenant 2 dans la direction longitudinale AL du véhicule agricole 1.

Bien que d'autres solutions puissent être envisagées, tels que par exemple des goujons ou des axes d'arrêt, il est avantageusement prévu que les secondes platines ou consoles 11 soient solidarisées aux longerons 10 par vissage.

Un montage par vissage ou par axes d'arrêts de l'essieu sur le contenant 2 permet de positionner l'essieu 3 à la demande selon la version et les équipements souhaités c'est-à-dire selon la position du centre de gravité. De plus, l'équilibre du véhicule 1 est optimum et le rayon de giration est également optimisé.

La charge sur le timon 12 est alors mieux maitrisée et la structure et le dimensionnement du timon peuvent alors être optimisés.

Une alternative pourrait être une platine 11 à souder sur le longeron 10 mais sans les avantages d'optimisation en fonction des équipements.

Préférentiellement, le véhicule 1 comporte un timon 12 qui est relié au contenant 2 et/ou à des longerons support 10 disposés sous le fond 2' dudit contenant 2, ce par l'intermédiaire d'un peson 13 additionnel, identique ou non aux autres pesons 4 et 4'.

Les axes longitudinaux des longerons 10 et ceux al des pesons 4 et 4' de la paire concernée sont avantageusement situés dans les mêmes plans verticaux.

Bien entendu, l'invention n'est pas limitée à des modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention limité par les revendications annexées.

## Revendications

1. Véhicule agricole (1) comprenant un contenant (2) monté sur au moins un train (1') de roues (6, 6'), en particulier remorque benne, mélangeuse ou remorque mélangeuse, dans lequel le contenant (2) repose par l'intermédiaire de platines ou de consoles de fixation (9, 11) et de pesons ou capteurs de pesée (4, 4'), préférentiellement directement, c'est-à-dire sans mise en oeuvre d'un châssis intermédiaire, sur un ou plusieurs essieu(x) formant ledit train de roues (1'),
véhicule (1) **caractérisé en ce que** le contenant (2) est monté sur l'essieu (3) ou chacun des essieux (3) du train (1') considéré par l'intermédiaire d'au moins deux paires (5 et 5') de pesons (4, 4'), chaque paire (5, 5') étant constituée par deux pesons (4 et 4') situés de part et d'autre d'un plan vertical (PV) contenant l'axe (X) de l'essieu (3), dans le cas d'un train (1') à essieu unique, ou d'un plan (PV) parallèle aux plans verticaux contenant les axes (X, X', X") des essieux (3) d'un train (1') à plusieurs essieux.

2. Véhicule selon la revendication 1, **caractérisé en ce que** les deux pesons (4 et 4') d'une même paire (5, 5') sont arrangés sensiblement symétriquement par rapport au plan vertical (PV) associé, **en ce que** les pesons (4, 4') des deux paires sont identiques, et **en ce que** chaque paire de pesons (5, 5') est décalée latéralement par rapport à l'axe longitudinal (AL) du véhicule (1) en direction, et préférentiellement à proximité immédiate, de la roue (6) ou des roues (6, 6') du train (1'), située(s) d'un côté du véhicule (1).

3. Véhicule selon la revendication 1, **caractérisé en ce que** les deux pesons (4 et 4') d'une même paire (5, 5') sont arrangés de manière asymétrique par rapport au plan vertical (PV) associé, les pesons (4, 4') des deux paires étant éventuellement différents et **en ce que** chaque paire de pesons (5, 5') est décalée latéralement par rapport à l'axe longitudinal (AL) du véhicule (1) en direction, et préférentiellement à proximité immédiate, de la roue (6) ou des roues (6, 6') du train (1'), située(s) d'un côté du véhicule (1).

4. Véhicule agricole selon l'une quelconque des revendications 1 à 3, **caractérisé en ce que** chaque peson (4, 4') est solidarisé, d'une part, vers le bas, avec la traverse (7) de l'essieu unique (3) ou avec un élément de suspension (8) reliant les traverses (7) de deux essieux (3), par l'intermédiaire d'une première platine ou console de fixation (9) et, d'autre part, vers le haut, avec le fond (2') du contenant (2) ou avec un longeron (10) s'étendant sous ledit fond (2'), par l'intermédiaire d'une seconde platine ou console de fixation (11), fournissant ainsi une liaison rigide entre ledit contenant (2) et la ou les traverse(s) (7) de l'essieu (3), les zones de solidarisation des secondes platines ou consoles (11) des deux pesons (4, 4') d'une même paire (5, 5') avec le fond (2') ou un longeron (10) étant situées à distance du plan vertical (PV) associé à la paire considérée.

5. Véhicule selon la revendication 4, **caractérisé en ce que** les deux pesons (4 et 4') d'une même paire de pesons (5, 5') sont solidarisés avec la traverse (7) de l'essieu (3) unique ou avec l'élément de suspension (8) reliant les traverses (7) de deux essieux (3), par l'intermédiaire d'une même console ou platine inférieure (9) comportant deux sites de montage (9') opposés et symétriques pour lesdits pesons (4 et 4') de la paire (5, 5') considérée.

6. Véhicule agricole selon l'une quelconque des revendications 1 à 5, **caractérisé en ce que** chaque peson (4, 4') présente une structure allongée, avec une extension privilégiée selon un axe longitudinal (al), les axes longitudinaux (al) des quatre pesons (4, 4') des deux paires (5, 5') affectées à l'essieu (3) ou à une même traverse (7), étant tous situés dans un même plan horizontal (PH), en étant préférentiellement parallèles à l'axe longitudinal (AL) du véhicule agricole (1).

7. Véhicule agricole selon l'une quelconque des revendications 4 et 5, **caractérisé en ce que** chacun des quatre pesons (4, 4') des deux paires (5, 5') affectées à l'essieu (3) ou à une même traverse (7), présente une structure allongée s'étendant selon un axe longitudinal (al), les deux pesons (4 et 4') de chaque paire (5, 5') étant conformés et montés de telle manière que leurs sites de montage (9', 11'), respectivement au niveau de la première platine (9) et au niveau des deux secondes platines (11), soient sensiblement alignés.

8. Véhicule agricole selon l'une quelconque des revendications 1 à 7, **caractérisé en ce que** chaque peson (4, 4') consiste en un capteur de flexion ou de cisaillement orienté ou unidirectionnel, préférentiellement en une jauge de contrainte allongée de forme cylindrique, déformable sous contrainte selon une direction transversale à sa direction longitudinale (al) et sensiblement rigide dans les autres directions.

9. Véhicule agricole selon l'une quelconque des revendications 1 à 8, **caractérisé en ce que** le fond (2') du contenant (2) est monté sur deux longerons support (10) qui comportent une pluralité de sites de solidarisation (10') pour les consoles ou platines (11) de fixation supérieure des pesons (4, 4'), autorisant une pluralité de positionnements relatifs de fixation des paires de pesons (5 et 5') par rapport au contenant (2) dans la direction longitudinale (AL) du véhicule agricole (1).

10. Véhicule agricole selon les revendications 4 et 9, **caractérisé en ce que** les secondes platines ou consoles (11) sont solidarisées aux longerons (10) par vissage.

11. Véhicule agricole selon l'une quelconque des revendications 1 à 10, **caractérisé en ce qu'**il comporte un timon (12) qui est relié au contenant (2) et/ou à des longerons support (10) disposés sous le fond (2') dudit contenant (2), ce par l'intermédiaire d'un peson additionnel (13), identique ou non aux autres pesons (4 et 4').

12. Véhicule selon l'une quelconque des revendications 1 à 11, **caractérisé en ce que**, dans le cas d'un train de roues (1') à deux essieux (3), ces essieux (3) sont fixés aux deux extrémités opposés d'un élément de suspension (8) allongé sous forme d'arrangement de lames ressort, les deux pesons (4, 4') de chacune des paires (5, 5') concernées étant solidarisés, de manière centrée, audit arrangement de lames ressort (8) par une console de fixation inférieure (9).

13. Véhicule selon l'une quelconque des revendications 1 à 11, **caractérisé en ce que**, dans le cas d'un train de roues (1') à deux essieux (3) chaque essieu (3) est fixé, de manière centrée, à un élément de suspension (8) allongé sous forme d'arrangement de lames ressort, les deux extrémités opposées dudit élément de suspension (8) étant chacune solidarisée à une paire (5, 5') de pesons (4, 4') par l'intermédiaire d'une console de fixation (9), une desdites consoles (9) étant éventuellement reliée aux extrémités en regard ou mutuellement rapprochée des deux éléments de suspension allongés (8).

## Patentansprüche

1. Landwirtschaftliches Fahrzeug (1), aufweisend ein Behältnis (2) angebracht auf mindestens einem Zugteil (1') mit Rädern (6, 6'), insbesondere Anhängeraufbau, Mischer oder Mischeranhänger, wobei das Behältnis (2) über Befestigungsplatten oder -konsolen (9, 11) und Waagen oder Wägeaufnehmer (4, 4'), vorzugsweise direkt, das heißt, ohne Einsatz eines Zwischengestells, auf einer oder mehreren Radachsen ruht, die den Radzugteil (1') bilden,
wobei das Fahrzeug (1) **dadurch gekennzeichnet ist, dass** das Behältnis (2) auf dem Radsatz (3) oder jeder der Radsätze (3) des entsprechenden Zugteils (1') über mindestens zwei Paare (5 und 5') von Waagen (4, 4') angebracht ist, wobei jedes Paar (5, 5') von zwei Waagen (4 und 4') gebildet wird, die sich im Fall eines Zugteils (1') mit einem einzigen Radsatz beiderseits einer vertikalen Ebene (PV), welche die Achse (X) des Radsatzes (3) enthält, oder einer zu den vertikalen Ebenen, welche die Achsen (X, X', X") der Radsätze (3) eines Zugteils (1') mit mehreren Radsätzen enthalten, parallelen Ebene (PV) befinden.

2. Fahrzeug nach Anspruch 1, **dadurch gekennzeichnet, dass** die zwei Waagen (4 und 4') eines selben Paares (5, 5') in Bezug auf die zugeordnete vertikale Ebene (PV) etwa symmetrisch angeordnet sind, dass die Waagen (4, 4') der zwei Paare identisch sind und dass jedes Paar von Waagen (5, 5') in Bezug auf die Längsachse (AL) des Fahrzeugs (1) in Richtung und vorzugsweise in unmittelbare Nähe des Rades (6) oder der Räder (6, 6') des Zugteils (1'), das/die sich auf einer Seite des Fahrzeugs (1) befindet/befinden, seitlich versetzt ist.

3. Fahrzeug nach Anspruch 1, **dadurch gekennzeichnet, dass** die zwei Waagen (4 und 4') eines selben Paares (5, 5') in Bezug auf die zugeordnete vertikale Ebene (PV) asymmetrisch angeordnet sind, wobei die Waagen (4, 4') der zwei Paare eventuell unterschiedlich sind und dass jedes Paar von Waagen (5, 5') in Bezug auf die Längsachse (AL) des Fahrzeugs (1) in Richtung und vorzugsweise in unmittelbare Nähe des Rades (6) oder der Räder (6, 6') des Zugteils (1'), das/die sich auf einer Seite des Fahrzeugs (1) befindet/befinden, seitlich versetzt ist.

4. Landwirtschaftliches Fahrzeug nach einem der Ansprüche 1 bis 3, **dadurch gekennzeichnet, dass** jede Waage (4, 4') zum einen nach unten mit dem Querträger (7) des einzigen Radsatzes (3) oder mit einem Aufhängungselement (8), welches die Querträger (7) von zwei Radsätzen (3) verbindet, über eine erste Befestigungsplatte oder -konsole (9) und zum anderen nach oben mit dem Boden (2') des Behältnisses (2) oder mit einem Längsträger (10), der sich unter dem Boden (2') erstreckt, über eine zweite Befestigungsplatte oder -konsole (11) fest verbunden ist, wodurch eine starre Verbindung zwischen dem Behältnis (2) und dem oder den Querträger(n) (7) des Radsatzes (3) bereitgestellt wird, wobei sich die festen Verbindungsbereiche der zweiten Platten oder Konsolen (11) der zwei Waagen (4, 4') eines selben Paares (5, 5') mit dem Boden (2') oder einem Längsträger (10) von der, dem entsprechenden Paar zugeordneten, vertikalen Ebene (PV) beabstandet befinden.

5. Fahrzeug nach Anspruch 4, **dadurch gekennzeichnet, dass** die zwei Waagen (4 und 4') eines selben Paares von Waagen (5, 5') mit dem Querträger (7) des einzigen Radsatzes (3) oder mit dem Aufhängungselement (8), welches die Querträger (7) von zwei Radsätzen (3) verbindet, über eine selbe untere Konsole oder Platte (9) fest verbunden sind, die zwei gegenüberliegende und symmetrische Montagestellen (9') für die Waagen (4 und 4') des entsprechenden Paares (5, 5') aufweist.

6. Landwirtschaftliches Fahrzeug nach einem der Ansprüche 1 bis 5, **dadurch gekennzeichnet, dass** jede Waage (4, 4') eine längliche Struktur mit einer bevorzugten Erweiterung gemäß einer Längsachse (al) aufweist, wobei sich die Längsachsen (al) der vier Waagen (4, 4') der zwei Paare (5, 5'), die den Radsatz (3) oder einem selben Querträger (7) zugewiesen sind, alle in einer selben horizontalen Ebene (PH) erstrecken, indem sie vorzugsweise parallel zur Längsachse (AL) des landwirtschaftlichen Fahrzeugs (1) sind.

7. Landwirtschaftliches Fahrzeug nach einem der Ansprüche 4 und 5, **dadurch gekennzeichnet, dass** jede der vier Waagen (4, 4') der zwei Paare (5, 5'), die dem Radsatz (3) oder einem selben Querträger (7) zugewiesen sind, eine längliche Struktur aufweist, die sich gemäß einer Längsachse (al) erstreckt, wobei die zwei Waagen (4 und 4') jedes Paares (5, 5') derart angepasst und eingebaut sind, dass ihre Montagestellen (9', 11') jeweils im Bezug auf die erste Platte (9) bzw. im Bezug auf die zwei zweiten Platten (11) im Wesentlichen fluchten.

8. Landwirtschaftliches Fahrzeug nach einem der Ansprüche 1 bis 7, **dadurch gekennzeichnet, dass** jede Waage (4, 4') aus einem ausgerichteten oder unidirektionalen Biege- oder Scherkraftsensor, vorzugsweise aus einem länglichen Dehnungsmessstreifen zylindrischer Form, besteht, der bei Beanspruchung gemäß einer zu seiner Längsrichtung (al) querverlaufenden Richtung verformbar und in den anderen Richtungen im Wesentlichen starr ist.

9. Landwirtschaftliches Fahrzeug nach einem der Ansprüche 1 bis 8, **dadurch gekennzeichnet, dass** der Boden (2') des Behältnisses (2) auf zwei stützenden Längsträgern (10) angebracht ist, die eine Vielzahl von festen Verbindungsstellen (10') für die Konsolen oder Platten (11) für die obere Befestigung der Waagen (4, 4') aufweisen, die eine Vielzahl von relativen Befestigungspositionierungen der Paare von Waagen (5 und 5') bezüglich dem Behältnis (2) in der Längsrichtung (AL) des landwirtschaftlichen Fahrzeugs (1) gestatten.

10. Landwirtschaftliches Fahrzeug nach den Ansprüchen 4 und 9, **dadurch gekennzeichnet, dass** die zweiten Platten oder Konsolen (11) mit den Längsträgern (10) durch Schrauben fest verbunden sind.

11. Landwirtschaftliches Fahrzeug nach einem der Ansprüche 1 bis 10, **dadurch gekennzeichnet, dass** es eine Deichsel (12) aufweist, die mit dem Behältnis (2) und/oder mit stützenden Längsträgern (10), die unter dem Boden (2') des Behältnisses (2) angeordnet sind, verbunden ist, zwar über eine zusätzliche Waage (13), die mit den anderen Waagen (4 und 4') identisch ist oder nicht.

12. Fahrzeug nach einem der Ansprüche 1 bis 11, **dadurch gekennzeichnet, dass**, im Fall eines Zugteils mit Rädern (1') mit zwei Radsätzen (3), dieser Radsatz (3) an den zwei gegenüberliegenden Enden eines länglichen Aufhängungselements (8) in Form einer Blattfederanordnung befestigt sind, wobei die zwei Waagen (4, 4') jedes der entsprechenden Paare (5, 5') mit der Blattfederanordnung (8) durch eine untere Befestigungskonsole (9) zentriert fest verbunden sind.

13. Fahrzeug nach einem der Ansprüche 1 bis 11, **dadurch gekennzeichnet, dass**, im Fall eines Zugteils mit Rädern (1') mit zwei Radsätzen (3), jeder Radsatz (3) an einem länglichen Aufhängungselement (8) in Form einer Blattfederanordnung zentriert befestigt ist, wobei die zwei gegenüberliegenden Enden des Aufhängungselements (8) jeweils mit einem Paar (5, 5') von Waagen (4, 4') über eine Befestigungskonsole (9) fest verbunden sind, wobei eine der Konsolen (9) ggf. mit den gegenüberstehenden Enden verbunden ist, oder mit den zwei länglichen Aufhängungselementen (8) wechselseitig angenähert ist.

## Claims

1. Agricultural vehicle (1) comprising a container (2) mounted on at least one set (1') of wheels (6, 6'), in particular tipping trailer, mixer or mixer trailer, in which the container (2) rests by means of fixing plates or brackets (9, 11) and balances or weight sensors (4, 4'), preferably directly, that is, without using an intermediate chassis, on one or more axles forming said set (1') of wheels,
vehicle (1) **characterised in that** the container (2) is mounted on the axle (3) or each of the axles (3) of the set (1') in question by means of at least two pairs (5 and 5') of balances (4, 4'), each pair (5, 5') consisting of two balances (4 and 4') situated on either side of a vertical plane (PV) containing the axis (X) of the axle (3), in the case of a single-axle set (1'), or a plane (PV) parallel to the vertical planes containing the axes (X, X', X") of the axles (3) of a multi-axle set (1').

2. Vehicle according to claim 1, **characterised in that** the two balances (4 and 4') of the same pair (5, 5') are arranged substantially symmetrically relative to the associated vertical plane (PV), **in that** the balances (4, 4') of the two pairs are identical, and **in that** each pair of balances (5, 5') is offset laterally with respect to the longitudinal axis (AL) of the vehicle in the direction, and preferably in the immediate proximity, of the wheel (6) or wheels (6, 6') of the set (1'), situated on one side of the vehicle (1).

3. Vehicle according to claim 1, **characterised in that** the two balances (4 and 4') of the same pair (5, 5') are arranged asymmetrically with respect to the associated vertical plane (PV), the balances (4, 4') of the two pairs being possibly different, and **in that** each pair of balances (5, 5') is offset laterally from the longitudinal axis (AL) of the vehicle in the direction, and preferably in the immediate proximity, of the wheel (6) or wheels (6, 6') of the set (1'), situated on one side of the vehicle (1).

4. Agricultural vehicle according to anyone of claims 1 to 3, **characterised in that** each balance (4, 4') is joined, on the one hand, in the lower region, with the crossbar (7) of the single axle (3) or with a suspension element (8) connecting the crossbars (7) of two axles (3), by means of a first fixing plate or bracket (9) and, on the other hand, in the upper region, with the bottom (2') of the container (2) or to a side rail (10) extending under said bottom (2'), by means of a second fixing plate or bracket (11), thus providing a rigid connection between said container (2) and the crossbar or crossbars (7) of the axle (3), the zones of the second plates or brackets (11) of the two balances (4, 4') of the same pair (5, 5') for joining with the bottom (2') or to a side rail (10) being situated at a distance from the vertical plane (PV) associated with the pair in question.

5. Vehicle according to claim 4, **characterised in that** the two balances (4 and 4') of the same pair of balances (5, 5') are joined with the crossbar (7) of the single axle (3) or with the suspension element (8) connecting the crossbars (7) of two axles (3), by means of the same lower plate or bracket (9) comprising two opposed and symmetrical mounting sites (9') for said balances (4 and 4') of the pair (5, 5') in question.

6. Agricultural vehicle according to anyone of claims 1 to 5, **characterised in that** each balance (4, 4') has an elongate structure, preferably extending along a longitudinal axis (a1), the longitudinal axes (al) of the four balances (4, 4') of the two pairs (5, 5') allocated to the axle (3) or to the same crossbar (7) all being situated in the same horizontal plane (PH), while being preferably parallel to the longitudinal axis (AL) of the agricultural vehicle (1).

7. Agricultural vehicle according to anyone of claims 4 and 5, **characterised in that** each of the four balances (4, 4') of the two pairs (5, 5') allocated to the axle (3) or to the same crossbar (7) has an elongate structure extending along a longitudinal axis (a1), the two balances (4 and 4') of each pair (5, 5') being shaped and mounted in such a way that their mounting sites (9', 11'), respectively at the level of the first plate (9) and at the level of the two second plates (11), are substantially aligned.

8. Agricultural vehicle according to anyone of claims 1 to 7, **characterised in that** each balance (4, 4') consists of a directed or unidirectional bending or shear sensor, preferably an elongate strain gauge of cylindrical shape which is deformable under stress in a direction transverse to its longitudinal direction (al) and substantially rigid in the other directions.

9. Agricultural vehicle according to anyone of claims 1 to 8, **characterised in that** the bottom (2') of the container (2) is mounted on two supporting side rails (10) which comprise a plurality of joining sites (10') for the upper fixing brackets or plates (11) of the balances (4, 4'), allowing a plurality of relative positions for fixing the pairs of balances (5 and 5') relative to the container (2) in the longitudinal direction (AL) of the agricultural vehicle (1).

10. Agricultural vehicle according to claims 4 and 9, **characterised in that** the second plates or brackets (11) are joined to the side rails (10) by screwing.

11. Agricultural vehicle according to anyone of claims 1 to 10, **characterised in that** it comprises a drawbar (12) which is connected to the container (2) and/or to supporting side rails (10) disposed under the bottom (2') of said container (2), this being by means of an additional balance (13) which may or may not be identical with the other balances (4 and 4').

12. Vehicle according to anyone of claims 1 to 11, **characterised in that**, in the case of a set (1') of wheels with two axles (3), these axles (3) are fixed to the two opposed ends of an elongate suspension element (8) in the form of an arrangement of spring leaves, the two balances (4, 4') of each of the pairs (5, 5') concerned being joined, in a centred fashion, to said arrangement of spring leaves (8) by a lower fixing bracket (9).

13. Vehicle according to anyone of claims 1 to 11, **characterised in that**, in the case of a set (1') of wheels with two axles (3), each axle (3) is fixed, in a centred fashion, to an elongate suspension element (8) in the form of an arrangement of spring leaves, the two opposed ends of said suspension element (8) being each joined to a pair (5, 5') of balances (4, 4') by means of a fixing bracket (9), one of said brackets (9) being possibly connected to the ends facing or closer to each other of the two elongate suspension elements (8).
